(19) Europäisches Patentamt
European Patent Office
Office européen des brevets

(11) Numéro de publication: **0 551 369 B1**

(12) **FASCICULE DE BREVET EUROPEEN**

(45) Date de publication de fascicule du brevet: **26.10.94**

(51) Int. Cl.5: **C07F 7/18**, C09D 5/24, C03C 27/12

(21) Numéro de dépôt: **91917779.0**

(22) Date de dépôt: **01.10.91**

(86) Numéro de dépôt internationale :
**PCT/FR91/00770**

(87) Numéro de publication internationale :
**WO 92/06100 (16.04.92 92/09)**

# (54) AGENT DE COUPLAGE DU TYPE SILANE, PROCEDE POUR SA PREPARATION, ET SON UTILISATION POUR LA REALISATION D'UN REVETEMENT CONDUCTEUR SUR DU VERRE.

(30) Priorité: **03.10.90 FR 9012201**

(43) Date de publication de la demande:
**21.07.93 Bulletin 93/29**

(45) Mention de la délivrance du brevet:
**26.10.94 Bulletin 94/43**

(84) Etats contractants désignés:
**DE ES**

(56) Documents cités:
**FR-A- 1 184 098**

**JOURNAL OF THE AMERICAN CHEMICAL SOCIETY, vol. 104, no. 7, 7 Avril 1982, GASTON, PA US pages 2031-2034; SIMON, R.A. et al. voir le document en entier**

**CHEMISTRY LETTERS, no. 4, Avril 1984, TOKYO JP pages 509-512; KOMORI, T. et al. voir le document en entier**

(73) Titulaire: **Office National d'Etudes et de Recherches Aérospatiales (O.N.E.R.A.)**
**29 Avenue de la Division Leclerc**
**F-92320 Châtillon-sous-Bagneux (FR)**

(72) Inventeur: **BLOCH, Bertrand**
**4, square Lagarde**
**F-75005 Paris (FR)**
Inventeur: **ATTIAS, André**
**8, rue Beauregard**
**F-75002 Paris (FR)**
Inventeur: **ANCELLE, Jacques**
**1, rue Marc-Sangnier**
**F-92290 Châtenay-Malabry (FR)**
Inventeur: **ANDRIEUX, Claude**
**17, rue des Grands-Champs**
**F-75020 Paris (FR)**
Inventeur: **AUDEBERT, Pierre**
**160, rue Jeanne-d'Arc**
**F-75013 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

(74) Mandataire: **Plaçais, Jean-Yves**
**Cabinet Netter,**
**40, rue Vignon**
**F-75009 Paris (FR)**

## Description

L'invention concerne un composé du type silane utilisable comme agent de couplage, comprenant un groupe fonctionnel susceptible de réagir pour s'incorporer dans la chaîne d'un polymère conducteur de l'électricité, le groupe silane pouvant quant à lui se lier chimiquement à un substrat minéral, notamment de verre, pour former un revêtement adhérent de ce polymère.

Conformément à un usage établi dans l'industrie, on appelle ici "silane" un composé contenant un groupe $-Si(-OR^1)_3$, $R^1$ étant un radical monovalent et plus particulièrement un radical alcoyle.

De tels composés sont divulgués par J. Am. Chem. Soc. 1982, 104, pp 2031 à 2034 et par FR-A-1184098. Dans ces composés connus, un groupe fonctionnel pyrrolidyle est relié au groupe silane par une chaîne $(CH_2)_n$.

L'invention vise en particulier un composé possédant la formule suivante :

$(Py-R^2-CHOH-CH_2-)_nNR^4_p-R^3-Si(-OR^1)_3$ (II)

dans laquelle Py représente le radical pyrrolidyle

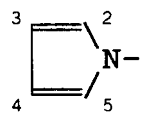

pouvant être substitué en position 3 et/ou 4, $R^1$ représente un radical monovalent, $R^2$ et $R^3$ représentent chacun un radical bivalent, $R^4$ représente un radical monovalent ou un atome d'hydrogène, n est égal à 1 ou 2 et p est égal à 2-n.

Dans un exemple particulier du composé selon l'invention, $R^1$, $R^2$ et $R^3$ représentent respectivement les radicaux $C_2H_5$, $CH_2$ et $(CH_2)_3$ et n est égal à 2.

L'invention vise également un agent de couplage possédant la formule suivante :

$Py-R^2-NR^4_p[-CH_2-CHOH-R^3-Si(-OR^1)_3]_n$ (III)

dans laquelle Py représente le radical pyrrolidyle

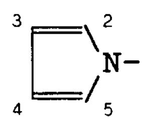

pouvant être substitué en position 3 et/ou 4, $R^1$ représente un radical monovalent, $R^2$ et $R^3$ représentent chacun un radical bivalent, $R^4$ représente un radical monovalent ou un atome d'hydrogène, n est égal à 1 ou 2 et p est égal à 2-n.

Avantageusement, $R^1$, $R^2$, $R^3$, $R^4$ représentent respectivement les radicaux $CH_3$, $(CH_2)_3$, $CH_2-O-(CH_2)_3$, $CH_3$ et n est égal à 1.

Alternativement, $R^1$, $R^2$, $R^3$ représentent respectivement les radicaux $CH_3$, $(CH_2)_3$, $CH_2-O-(CH_2)_3$ et n est égal à 2.

L'invention a également pour objet un procédé de préparation du composé défini ci-dessus, dans lequel on fait réagir ensemble deux molécules comportant respectivement un groupe amine et un groupe époxyde, l'une de ces molécules contenant en outre un groupe pyrrolidyle et l'autre contenant un groupe $-Si(-OR^1)_3$.

A titre d'exemple, les molécules utilisées dans le procédé selon l'invention peuvent être

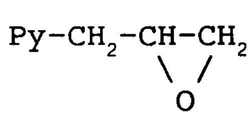

(IV)

et

$NH_2-(CH_2)_3-Si(-OCH_2CH_3)_3$ (V).

La molécule de la formule (IV) ci-dessus peut être obtenue en particulier en introduisant goutte à goutte du pyrrole dans un mélange réactionnel aqueux contenant de la soude, de l'hydrogénosulfate de tétrabutylammonium et de l'épichlorhydrine, agité violemment et refroidi de façon à ne pas dépasser la température ambiante.

Alternativement, les molécules utilisées peuvent être, d'une part, le silane commercial à fonction époxyde :

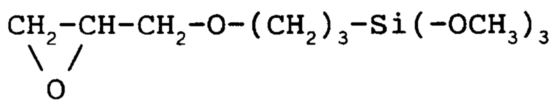

(VI)

et, d'autre part, l'un des composés suivants :

$Py-(CH_2)_3-NH_2$ (VII)

et

$Py-(CH_2)_3-NH-CH_3$ (VIII).

La molécule de la formule (VII) se prépare aisément selon le procédé décrit par FOULDS dans Anal. Chem, 60, 2473 (1988). De même la molécule de la formule (VIII) peut être obtenue selon le procédé décrit dans la Demande de Brevet européen 338 989.

L'invention vise aussi l'utilisation des composés définis ci-dessus pour la réalisation d'un revêtement conducteur de l'électricité adhérant à un substrat minéral, par exemple en verre ou en silice, par formation de liaisons covalentes entre les atomes de silicium du composé et la surface du substrat, et oxydation des groupes pyrrolydyle du composé et d'un pyrrole additionnel pour former un polymère incluant le composé et rendre ce polymère conducteur. Ce pyrrole additionnel peut être le pyrrole proprement dit ou un pyrrole substitué en l'une ou les deux positions en $\beta$ de l'atome d'azote.

De façon plus détaillée, l'utilisation selon l'invention prévoit qu'on hydrolyse les groupes alkoxysilane du composé dans une solution hydroalcoolique, qu'on immerge le substrat dans la solution, qu'on immerge ensuite le substrat traité dans une solution aqueuse de chlorure ferrique et qu'on y introduit le pyrrole additionnel en agitant fortement.

Dans une variante de l'utilisation selon l'invention, au lieu de faire réagir le composé selon l'invention préconstitué avec le substrat, on fait réagir une molécule contenant le radical pyrrolidyle avec le substrat préalablement traité par un silane commercial, cette molécule et ce silane comportant l'un un groupe amine et l'autre un groupe époxyde.

Le substrat peut être notamment un renfort fibreux, par exemple sous forme de tissu, pour matériau composite. L'invention permet alors de régler les propriétés électriques de ce matériau composite.

<u>Exemple 1 :</u> Synthèse d'une molécule contenant un groupe réactif époxyde et un groupe pyrrolidyle.

Un milieu réactionnel formé de 200g de soude NaOH, 8,4g d'hydrogénosulfate de tétrabutylammonium, 200 ml d'eau et 125 ml d'épichlorhydrine, est agité très violemment à température ambiante dans un réacteur d'un litre. On ajoute goutte à goutte 40 g de pyrrole fraîchement distillé en refroidissant la solution par un bain d'eau glacée afin de maintenir la température du mélange entre 15 et 20°C. On laisse le mélange sous agitation avec un courant d'azote pendant 3 heures, on ajoute 100 ml d'éther pour faire décanter une phase aqueuse et une phase organique qu'on sépare l'une de l'autre. On extrait deux fois la phase aqueuse par 100 ml d'éther. La totalité de la phase organique est lavée à l'eau salée jusqu'à neutralisation, séchée sur tamis moléculaire, filtrée et distillée sous vide. On obtient 58 g de N-glycidylpyrrole

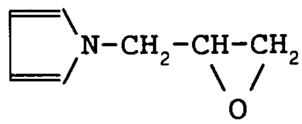

soit un rendement de 80%. Le produit est caractérisé par RMN $^1H$ et RMN $^{13}C$. Sa pureté est de 93% ; elle est déterminée par chromatographie en phase liquide.

Exemples 2 et 3 : Synthèse du composé de formule (II)

Cette synthèse est réalisée en faisant réagir la molécule obtenue dans l'exemple 1 avec l'amino 3 propyltriéthoxysilane $NH_2$-$(CH_2)_3Si$-$(OCH_2CH_3)_3$, produit commercial désigné communément sous la référence AII00.

Exemple 2

Dans un ballon de 50 ml convenablement asséché, on mélange 2,21 g (0,01 mole) de AII00 et 2,46 g (0,02 mole) du N-glycidylpyrrole obtenu dans l'exemple 1. On porte le mélange à 60 °C sous courant d'azote. L'avancement de la réaction est suivi par chromatographie d'exclusion de taille. Au bout de 6 heures, on obtient le composé $[Py$-$CH_2$-$CHOH$-$CH_2]_2$ $N$-$(CH_2)_3$-$Si$-$(OCH_2CH_3)_3$, la totalité du N-glycidylpyrrole ayant été consommée. Le composé est caractérisé par RMN $^1H$. Sa pureté est de 83%, déterminée par chromatographie.

Exemple 3

On opère comme dans l'exemple 2, la réaction étant conduite pendant 5 jours à température ambiante. On obtient un résultat sensiblement identique.

Exemples 4 et 5 : Synthèse des composés contenant un groupe réactif amine et un groupe pyrrolidyle.

Exemple 4 : Synthèse du composé de formule (VII).

Une suspension de 0,6 g d'hydrure de lithium-aluminium $LiAlH_4$ dans 50 $cm^3$ de tétrahydrofuranne THF est refroidie à 0 °C par un bain de glace, sous argon. Une solution de N-(cyano-2-éthyl) pyrrole (1 g) dans 20 ml de tétrahydrofuranne environ est ajoutée goutte à goutte pendant 15 minutes environ. Le bain de glace est retiré et le mélange est porté à reflux pendant 3 heures. Après hydrolyse de l'excès d'hydrure les phases aqueuses sont extraites à l'éther mélangé à 50% de pentane puis purifiées par chromatographie de filtration sur silice. Par évaporation on obtient une huile (0,615 g) caractérisé par RMN$^1H$ et $^{13}C$.

Exemple 5 : Synthèse du composé de formule (VIII)

Dans un ballon de 250 ml équipé d'un réfrigérant, d'une ampoule à brome et d'une arrivée d'azote et contenant 125 ml d'acide acétique, on verse goutte à goutte 22 g (0,25 mole) de N-méthyl-1,3-propanediamine en agitant violemment et en maintenant la température autour de 15 à 20 °C. On verse ensuite 33 g (0,27 mole) de 2,5-diméthoxytétrahydrofuranne. On porte à reflux pendant 30 minutes, l'avancement de la réaction étant suivi par RMN. On distille sous vide de trompe à eau et on récupère 90 ml d'acide acétique et de méthanol. Le milieu est amené à pH 10 par addition d'une solution de soude concentrée. On extrait par 125 ml de chloroforme. La phase aqueuse est lavée plusieurs fois au chloroforme. On rassemble les phases organiques, on élimine la majeure partie du chloroforme à l'évaporateur rotatif, puis on distille sous vide de pompe. On obtient avec un rendement de 46% le compose de formule (VIII), identifié par RMN $^1H$ et infra-rouge ($n_{20}^{D}$ = 1,498).

Exemples 6 à 8 : Synthèse des agents de couplage de formule (III).

Exemple 6

Dans un ballon de 50 ml convenablement asséché, on mélange 2,76 g (0,02 mole) du composé obtenu dans l'exemple 5 et 4,72 f (0,02 mole) de glycidyloxy-3-propyltriméthoxysilane (GLYMO). On porte le mélange à 60°C sous courant d'azote. L'avancement de la réaction est suivi par chromatographie d'exclusion de taille. Au bout de 5 heures, on obtient le composé Py-$(CH_2)_3$-$N(CH_3)$-$CH_2$-CHOH-$CH_2$-O-$(CH_2)_3$-Si-$(OCH_3)_3$, la totalité du silane ayant été consommée. Le composé obtenu et caractérisé par RMN $^1$H, sa pureté étant de 85% par chromatographie.

Exemple 7

On opère comme dans l'exemple 6, la réaction étant conduite pendant 5 jours à température ambiante. On obtient sensiblement le même résultat.

Exemple 8

On opère comme dans l'exemple 6 à partir d'un mélange de 1,24 g (0,01 mole) du composé obtenu dans l'exemple 4 et de 4,72 g (0,02 mole) de glycidyloxy-3-propyltriméthoxysilane (GLYMO). Le composé obtenu, caractérisé par RMN $^1$H, a une pureté de 90% par chromatographie.

Exemples 9 à 14 : Réalisation d'un revêtement conducteur sur un substrat de verre.

La réalisation d'un revêtement conducteur à partir du composé préparé dans l'un des exemples 2, 3, 6, 7 ou 8 s'effectue en deux étapes.

Dans un premier temps, on hydrolyse le groupe silane en milieu hydroalcoolique, selon des modalités opératoires qui correspondent sensiblement à celles décrites dans la littérature et relatives aux silanes disponibles dans le commerce. Les paramètres qui ont une influence importante sur le résultat sont la concentration du silane dans la solution, le pH et l'âge de celle-ci. Puis, le substrat inorganique est placé dans la solution pendant une durée appropriée, rincé et séché.

Dans un second temps, le matériau traité précédemment est immergé dans une solution aqueuse contenant un agent d'oxydation provoquant la polymérisation des pyrroles et un agent de dopage rendant conducteurs les polypyrroles obtenus, l'agent d'oxydation constituant généralement en même temps l'agent de dopage. Une solution aqueuse de pyrrole est ajoutée en une fois sous agitation. Les paramètres à prendre en compte sont la concentration en oxydant et/ou en dopant, et en pyrrole, des solutions, ainsi que le temps de traitement. Le matériau traité est rincé abondamment à l'eau. Dans l'ignorance de l'épaisseur exacte du revêtement, on détermine la résistivité de surface en "ohms par carré" du produit. On mesure à l'aide d'un ohmmètre la résistance entre deux électriodes parallèles, on multiplie cette résistance par la longueur des électrodes et on divise par la distance entre celles-ci.

Exemple 9

On introduit 0,1 g du silane obtenu dans l'exemple 2 dans 10 ml d'un mélange isovolumique d'eau et d'isopropanol. Après 2 à 5 minutes, on immerge dans le milieu une plaque de verre préalablement dégraissée au chlorure de méthylène, mesurant 7,5 cm x 2,5 cm x 0,1 cm, qu'on laisse pendant 30 minutes. Le pH de la solution est de l'ordre de 9 à 10. La plaque est rincée à l'eau et portée à l'étuve à 110°C pendant 1 heure. Dans 50 ml d'une solution aqueuse de chlorure ferrique à 0,05 M, légèrement acidifiée avec de l'acide acétique, on plonge la plaque ainsi traitée puis on verse en une fois en agitant 50 ml d'une solution aqueuse de pyrrole fraîchement distillé à 0,02 M. Au bout de 4 heures, la plaque est revêtue d'une couche uniforme homogène d'un revêtement conducteur de couleur noire. Après rinçage à l'eau, la résistivité vaut 4,5 mégohms par carré.

Exemple 10

On procède comme dans l'exemple 9, en portant les concentrations des solutions de chlorure ferrique et de pyrrole à 0,3 M et 0,1 M respectivement. Au bout de 15 minutes, 45 minutes et 2 heures, on obtient des résistivités de 71 kiloohms par carré, 8 kiloohms par carré et 1,8 kiloohm par carré respectivement.

Exemple 11

On opère comme dans l'Exemple 9, en portant les concentrations des solutions de chlorure ferrique et de pyrrole à 1 M et 0,4 M respectivement. Au bout de 5 minutes et de 15 minutes, on obtient des résistivités de 20 kiloohms par carré et 1,7 kiloohm par carré respectivement.

Exemple 12

On part d'un fragment de 5 cm x 5 cm de tissu de verre revêtu d'un ensimage dit textile, que l'on élimine par un traitement thermique de 30 minutes à 500 °C. On opère ensuite comme dans l'exemple 9, les concentrations des solutions de chlorure ferrique et de pyrrole étant 0,08 M et 0,04 M respectivement. Au bout d'une heure, on obtient une résistivité de 39 kiloohms par carré.

Exemple 13

On opère comme dans l'exemple 12, les concentrations des solutions de chlorure ferrique et de pyrrole étant portées à 1 M et 0,4 M respectivement. Au bout de 15 minutes, on obtient une résistivité de 100 ohms par carré.

Exemple 14

On utilise comme substrat un fragment de 20 cm x 20 cm de tissu de verre disponible dans le commerce, déja traité par le silane All00. Dans un cristallisoir de 21 cm, on dissout 2 g de N -glycidylpyrrole dans 100 ml de chlorure de méthylène. Le tissu est plongé à plusieurs reprises dans la solution, jusqu'à épuisement de celle-ci. Puis l'échantillon traité est placé dans une étuve à 70 °C pendant 6 heures. A l'issue de ce traitement, le tissu est rincé à l'acétone puis à l'eau et placé dans un becher de 2 litres contenant un litre d'une solution aqueuse de chorure ferrique à 0,3 M, acidifiée par 5 $cm^3$ d'acide acétique. On verse en une fois en agitant fortement un litre d'une solution aqueuse de pyrrole fraîchement distillé à 0,1 M. Au bout de 20 minutes, le tissu est rincé abondamment à l'eau puis à l'acétone, et placé dans un dessiccateur sous vide de pompe en présence d'anhydride phosphorique pendant 1 heure. La résistivité vaut 20 kiloohms par carré.

Exemples comparatifs

A titre de comparaison, on a reproduit les exemples 9 à 11 en supprimant le silane selon l'invention. Aucun dépôt homogène adhérent ne s'est formé sur la plaque de verre. En remplaçant dans ces mêmes exemples le silane selon l'invention par le silane commercial All00, il se forme une couche hétérogène qui s'élimine en partie lors des opérations de rinçage.

On a également reproduit les exemples 12 et 13 en l'absence du silane selon l'invention. On a obtenu un dépôt noir de résistivité surfacique supérieure à 20 mégohms par carré.

**Revendications**

**1.** Composé de formule

$(Py\text{-}R^2\text{-}CHOH\text{-}CH_2\text{-})_nNR^4_p\text{-}R^3\text{-}Si(\text{-}OR^1)_3$ (II)

dans laquelle Py représente le radical pyrrolidyle

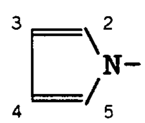

pouvant être substitué en position 3 et/ou 4, $R^1$ représente un radical monovalent, $R^2$ et $R^3$ représentent chacun un radical bivalent, $R^4$ représente un radical monovalent ou un atome d'hydrogène, n est égal à 1 ou 2 et p est égal à 2-n.

**2.** Composé selon la revendication 1, caractérisé en ce que $R^1$, $R^2$ et $R^3$ représentent respectivement les radicaux $C_2H_5$, $CH_2$ et $(CH_2)_3$ et que n est égal à 2.

**3.** Composé de formule

$Py\text{-}R^2\text{-}NR^4_p\,[\text{-}CH_2\text{-}CHOH\text{-}R^3\text{-}Si(\text{-}OR^1)_3]_n$ (III)

dans laquelle Py représente le radical pyrrolidyle

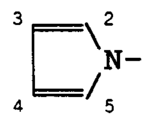

pouvant être substitué en position 3 et/ou 4, $R^1$ représente un radical monovalent, $R^2$ et $R^3$ représentent chacun un radical bivalent, $R^4$ représente un radical monovalent ou un atome d'hydrogène, n est égal à 1 ou 2 et p est égal à 2-n.

**4.** Composé selon la revendication 3, caractérisé en ce que $R^1$, $R^2$, $R^3$, $R^4$ représentent respectivement les radicaux $CH_3$, $(CH_2)_3$, $CH_2\text{-}O\text{-}(CH_2)_3$, $CH_3$ et en ce que n est égal à 1.

**5.** Composé selon la revendication 3, caractérisé en ce que $R^1$, $R^2$, $R^3$ représentent respectivement les radicaux $CH_3$, $(CH_2)_3$, $CH_2\text{-}O\text{-}(CH_2)_3$ et en ce que n est égal à 2.

**6.** Procédé de préparation du composé selon l'une des revendications précédentes, caractérisé en ce qu'on fait réagir ensemble deux molécules comportant respectivement un groupe amine et un groupe époxyde, l'une de ces molécules contenant en outre un groupe pyrrolidyle et l'autre contenant un groupe $\text{-}Si(\text{-}OR^1)_3$.

**7.** Procédé selon la revendication 6, caractérisé en ce que les molécules mutuellement réactives utilisées sont

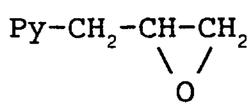

(IV)

et

$NH_2\text{-}(CH_2)_3\text{-}Si(\text{-}OCH_2CH_3)_3$ (V).

**8.** Procédé selon la revendication 7, caractérisé en ce que la molécule de formule (IV) est obtenue en introduisant goutte à goutte du pyrrole dans un mélange réactionnel aqueux contenant de la soude, de l'hydrogénosulfate de tétrabutylammonium et de l'épichlorhydrine, agité violemment et refroidi de façon à ne pas dépasser la température ambiante.

**9.** Procédé selon la revendication 6, caractérisé en ce que les molécules mutuellement réactives utilisées sont

$Py\text{-}(CH_2)_3\text{-}NH\text{-}CH_3$ (VIII)

et

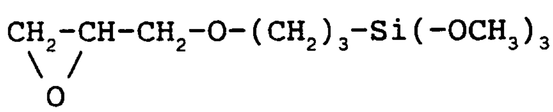

(VI).

**10.** Procédé selon la revendication 6, caractérisé en ce que les molécules mutuellement réactives utilisées sont

$Py\text{-}(CH_2)_3\text{-}NH_2$ (VII)

et

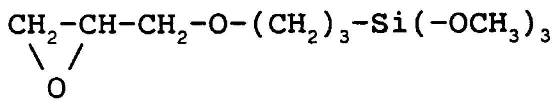

(VI).

**11.** Utilisation du composé selon l'une des revendications 1 à 5 pour la réalisation d'un revêtement conducteur de l'électricité adhérant à un substrat minéral, par formation de liaisons covalentes entre les atomes de silicium du composé et la surface du substrat, et oxydation des groupes pyrrolidyle du composé et d'un pyrrole additionnel pour former un polymère incluant le composé et rendre ce polymère conducteur.

**12.** Utilisation selon la revendication 11, caractérisée en ce que le substrat est en verre ou en silice.

**13.** Utilisation selon l'une des revendications 11 et 12, caractérisée en ce qu'on hydrolyse les groupes silane du composé dans une solution hydroalcoolique, qu'on immerge le substrat dans la solution, qu'on immerge ensuite le substrat traité dans une solution aqueuse de chlorure ferrique et qu'on y introduit le pyrrole additionnel en agitant.

**14.** Utilisation selon l'une des revendications 11 à 13, caractérisée en ce que, au lieu de faire réagir ledit compose préconstitué avec le substrat, on fait réagir une molécule contenant le radical pyrrolidyle avec le substrat préalablement ensimé par un silane, ladite molécule et le silane d'ensimage comportant l'un un groupe amine et l'autre un groupe époxyde.

**15.** Utilisation selon l'une des revendications 11 à 14, caractérisée en ce que le substrat est un renfort fibreux pour matériau composite.

## Claims

**1.** Compound of formula

$(Py\text{-}R^2\text{-}CHOH\text{-}CH_2\text{-})_nNR^4_p\ \text{-}R^3\text{-}Si(\text{-}OR^1)_3$ (II)

in which Py represents the pyrrolyl radical

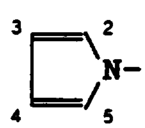

which may be substituted in position 3 and/or 4, $R^1$ represents a monovalent radical, $R^2$ and $R^3$ each represent a bivalent radical, $R^4$ represents a monovalent radical or a hydrogen atom, n is equal to 1 or 2 and p is equal to 2-n.

**2.** Compound according to Claim 1, characterized in that $R^1$, $R^2$ and $R^3$ respectively represent the $C_2H_5$, $CH_2$ and $(CH_2)_3$ radicals and in that n is equal to 2.

**3.** Compound of formula

$Py\text{-}R^2\text{-}NR^4_p\ [\text{-}CH_2\text{-}CHOH\text{-}R^3\text{-}Si(\text{-}OR^1)_3]_n$ (III)

in which Py represents the pyrrolyl radical

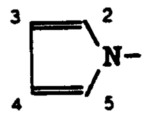

which may be substituted in position 3 and/or 4, $R^1$ represents a monovalent radical, $R^2$ and $R^3$ each represent a bivalent radical, $R^4$ represents a monovalent radical or a hydrogen atom, n is equal to 1 or 2 and p is equal to 2-n.

**4.** Compound according to Claim 3, characterized in that $R^1$, $R^2$, $R^3$ and $R^4$ respectively represent the $CH_3$, $(CH_2)_3$, $CH_2$-O-$(CH_2)_3$ and $CH_3$ radicals and in that n is equal to 1.

**5.** Compound according to Claim 3, characterized in that $R^1$, $R^2$ and $R^3$ respectively represent the $CH_3$, $(CH_2)_3$ and $CH_2$-O-$(CH_2)_3$ radicals and in that n is equal to 2.

**6.** Process for the preparation of the compound according to one of the preceding claims, characterized in that two molecules respectively containing an amine group and an epoxide group are reacted together, one of these molecules additionally containing a pyrrolyl group and the other containing a group -Si(-$OR^1)_3$.

**7.** Process according to Claim 6, characterized in that the mutually reactive molecules used are

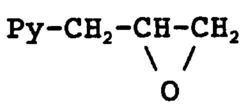 (IV)

and

$NH_2$-$(CH_2)_3$-Si(-$OCH_2CH_3)_3$ (V).

**8.** Process according to Claim 7, characterized in that the molecule of formula (IV) is obtained by introducing pyrrole dropwise into an aqueous reaction mixture containing sodium hydroxide, tetrabutylammonium hydrogenosulphate and epichlorohydrin, which is stirred vigorously and cooled so as not to exceed room temperature.

**9.** Process according to Claim 6, characterized in that the mutually reactive molecules used are

Py-$(CH_2)_3$-NH-$CH_3$ (VIII)

and

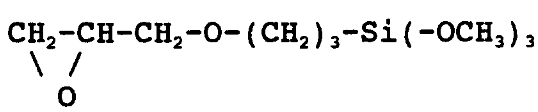 (VI).

**10.** Process according to Claim 6, characterized in that the mutually reactive molecules used are:

Py-$(CH_2)_3$-$NH_2$ (VII)

and

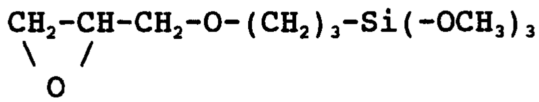

(VI).

11. Use of the compound according to one of Claims 1 to 5 for the production of an electrically-conductive coating which adheres to an inorganic substrate, by formation of covalent bonds between the silicon atoms of the compound and the surface of the substrate, and oxidation of the pyrrolyl groups of the compound and of an additional pyrrole in order to form a polymer which includes the compound and to make this polymer conductive.

12. Use according to Claim 11, characterized in that the substrate is made of glass or silica.

13. Use according to one of Claims 11 and 12, characterized in that the silane groups of the compound are hydrolysed in a water/alcohol solution, in that the substrate is immersed in the solution, in that the treated substrate is then immersed in an aqueous ferric chloride solution and in that the additional pyrrole is introduced therein with stirring.

14. Use according to one of Claims 11 to 13, characterized in that, instead of reacting the said preconstituted compound with the substrate, a molecule containing the pyrrolyl radical is reacted with the substrate which has been oiled beforehand with a silane, the said molecule and the oiling silane containing one an amine group and the other an epoxide group.

15. Use according to one of Claims 11 to 14, characterized in that the substrate is a fibrous reinforcer for a composite material.

**Patentansprüche**

1. Verbindung der Formel

$(Py\text{-}R^2\text{-}CHOH\text{-}CH_2\text{-})_nNR_p^4\text{-}R^3\text{-}Si(\text{-}OR^1)_3$ (II),

in der Py den Pyrrolidyl-Rest

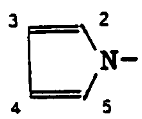

darstellt, der in Position 3 und/oder 4 substituiert sein kann, wobei $R^1$ einen einwertigen Rest darstellt, $R^2$ und $R^3$ jeweils einen zweiwertigen Rest darstellten, $R^4$ einen einwertigen Rest oder ein Wasserstoffatom darstellt, n gleich 1 oder 2 und p gleich 2-n ist.

2. Verbindung nach Anspruch 1,
dadurch gekennzeichnet,
daß $R^1$, $R^2$ und $R^3$ die Reste $C_2H_5$, $CH_2$ bzw. $(CH_2)_3$ darstellen und n gleich 2 ist.

3. Verbindung der Formel

$Py\text{-}R^2\text{-}NR_p^4[\text{-}CH_2\text{-}CHOH\text{-}R^3\text{-}Si(\text{-}OR^1)_3]_n$ (III),

in der Py den Pyrrolidyl-Rest

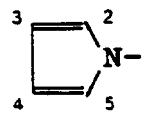

darstellt, der in Position 3 und/oder 4 substituiert sein kann, wobei $R^1$ einen einwertigen Rest darstellt, $R^2$ und $R^3$ jeweils einen zweiwertigen Rest darstellen, $R^4$ einen einwertigen Rest oder ein Wasserstoffatom darstellt, n gleich 1 oder 2 und p gleich 2-n ist.

**4.** Verbindung nach Anspruch 3,
dadurch gekennzeichnet,
daß $R^1$, $R^2$, $R^3$, $R^4$ die Reste $CH_3$, $(CH_2)_3$, $CH_2$-O-$(CH_2)_3$ bzw. $CH_3$ darstellen und daß n gleich 1 ist.

**5.** Verbindung nach Anspruch 3,
dadurch gekennzeichnet,
daß $R^1$, $R^2$, $R^3$ die Reste $CH_3$, $(CH_2)_3$ bzw. $CH_2$-O-$(CH_2)_3$ darstellen und daß n gleich 2 ist.

**6.** Verfahren zur Herstellung der Verbindung nach einem der vorhergehenden Ansprüche,
dadurch gekennzeichnet,
daß man zwei Moleküle miteinander reagieren läßt, die jeweils eine Aminogruppe und eine Epoxidgruppe besitzen, wobei eines dieser Moleküle außerdem eine Pyrrolidylgruppe und das andere eine Gruppe -Si(-$OR^1$)$_3$ enthält.

**7.** Verfahren nach Anspruch 6,
dadurch gekennzeichnet,
daß die verwendeten gegenseitig reagierenden Moleküle

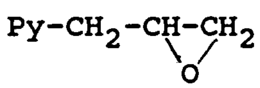
(IV)

und

$NH_2$-$(CH_2)_3$-Si(-$OCH_2CH_3$)$_3$ (V)

sind.

**8.** Verfahren nach Anspruch 7,
dadurch gekennzeichnet,
daß das Molekül der Formel (IV) erhalten wird, indem man tropfenweise Pyrrol in eine Soda, Tetrabutylammonium-Hydrogensulfat und Epichlorhydrin enthaltende wässrige Reaktionsmischung einführt, die kräftig gerührt und so gekühlt wird, daß sie die Raumtemperatur nicht überschreitet.

**9.** Verfahren nach Anspruch 6,
dadurch gekennzeichnet,
daß die verwendeten miteinander reagierenden Moleküle

Py-$(CH_2)_3$-NH-$CH_3$ (VIII)

und

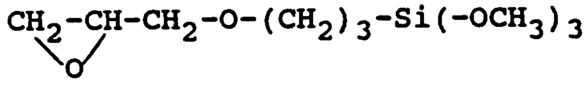
(VI)

sind.

**10.** Verfahren nach Anspruch 6,
dadurch gekennzeichnet,
daß die verwendeten miteinander reagierenden Moleküle

$Py\text{-}(CH_2)_3\text{-}NH_2$ (VII)

und

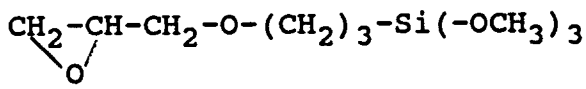

(VI)

sind.

**11.** Verwendung der Verbindung nach einem der Ansprüche 1 bis 5 zur Herstellung einer den Strom leitenden, auf einem mineralischen Substrat haftenden Beschichtung durch Bildung von kovalenten Bindungen zwischen den Siliciumatomen der Verbindung und der Oberfläche des Substrats und Oxidation der Pyrrolidylgruppen der Verbindung und eines zusätzlichen Pyrrols, um ein die Verbindung enthaltendes Polymer zu bilden und dieses Polymer leitend zu machen.

**12.** Verwendung nach Anspruch 11,
dadurch gekennzeichnet,
daß das Substrat Glas oder Kieselguhr ist.

**13.** Verwendung nach einem der Ansprüche 11 und 12,
dadurch gekennzeichnet,
daß man die Silangruppen der Verbindung in einer wässrig-alkoholischen Lösung hydrolysiert, daß man das Substrat in die Lösung eintaucht, daß man anschließend das behandelte Substrat in eine wässrige Eisen(III)-Chloridlösung eintaucht und daß man in diese das zusätzliche Pyrrol unter Rühren einführt.

**14.** Verwendung nach einem der Ansprüche 11 bis 13,
dadurch gekennzeichnet,
daß man, statt diese fertige Verbindung mit dem Substrat reagieren zu lassen, ein dem Pyrrolidyl-Rest enthaltendes Molekül mit dem zuvor mit einem Silan geschmälzten Substrat reagieren läßt, wobei von diesem Molekül und dem Schmälzungssilan das eine eine Aminogruppe und das andere eine Epoxidgruppe enthält.

**15.** Verwendung nach einem der Ansprüche 11 bis 14,
dadurch gekennzeichnet,
daß das Substrat eine faserhaltige Verstärkung für Verbundmaterial ist.